# EUROPÄISCHE PATENTSCHRIFT

(11) **EP 2 492 020 B1**
(45) Veröffentlichungstag und Bekanntmachung des Hinweises auf die Patenterteilung: **06.11.2013**
(21) Anmeldenummer: 11001516.1
(22) Anmeldetag: 24.02.2011
(51) Int. Cl.: B05B 13/00, B05B 15/12

(54) **Vorbehandlungskammer mit getrenntem Abführen der Behandlungsmedien in getrennte Behälter**
Pre-treatment chamber with separated discharge of treatment fluids into separate containers
Chambre de prétraitement comprenant une évacuation des fluides de traitement séparée dans des récipients séparés

(43) Veröffentlichungstag der Anmeldung: 29.08.2012
(73) Patentinhaber: Rippert Besitzgesellschaft mbH & Co. KG, 33442 Herzebrock-Clarholz (DE)
(72) Erfinder: Schmeller, Norbert, 90559 Burgthann (DE)
(74) Vertreter: Schober, Mirko

(56) Entgegenhaltungen:
- FR-A1- 2 668 401
- US-A- 3 981 320

## Beschreibung

Die Erfindung betrifft eine Vorbehandlungsanlage nach dem Oberbegriff des Anspruchs 1. Eine derartige Vorbehandlungsanlage ist aus FR 2 668 401 bekannt. Die Vorbehandlung der Oberflächen von Werkstücken für Oberflächenbehandlungen wie insbesondere Lackieren erfordert in der Praxis häufig mehrere Schritte, wie beispielsweise das Reinigen, Entfetten, Beizen, Chromatieren, Phosphatieren oder Passivieren der Oberfläche. Hierzu müssen die Oberflächen mit unterschiedlichen Medien, die in der Regel als Flüssigkeiten vorliegen, behandelt werden. Zwischen den Behandlungsschritten sind auch einzelne Spülschritte von Nöten, um eine Vermischung der einzelnen Medien zu verhindern.

Insbesondere aus Umweltschutz- aber auch aus Kostengründen wird es angestrebt, überschüssige und verunreinigte Medien, die beispielsweise beim Auftrag durch Besprühen der Oberflächen anfallen, aufzufangen, zu filtern und einer Wiederverwertung im System zuzuführen. Hierbei muss jedoch sichergestellt werden, dass unterschiedliche Medien nicht miteinander vermischt werden, da derart verunreinigte Medien in der Regel unbrauchbar werden. Daher sind herkömmliche Vorbehandlungsanlagen in der Regel als Durchlaufanlagen konzipiert, die unterschiedliche, räumlich getrennte Zonen aufweisen, in denen jeweils ein Behandlungsschritt durchgeführt wird. Die Werkstücke durchlaufen so mehrere Kammern, in denen sie mit den jeweiligen Medien behandelt werden. Die Medien werden in den Kammern auf die Oberflächen aufgebracht, in der Regel aufgesprüht, wobei überschüssige Medien aufgefangen und wiederverwertet werden. Nachteilig an diesen Anlagen ist jedoch, dass aufgrund der Mehrzahl der benötigten Kammern große Anlagen und mithin große Investitionskosten entstehen, die nur durch große Stückzahlen zu rechtfertigen sind.

Der Erfindung liegt daher die Aufgabe zugrunde, eine Vorbehandlungsanlage anzugeben, welche eine Vorbehandlung mit einer Mehrzahl Schritten bei einer erheblich geringeren Investition ermöglicht und sich somit insbesondere für den Einsatz bei kleinen Stückzahlen eignet.

Die Aufgabe wird gelöst durch eine Vorbehandlungsanlage mit den Merkmalen des Anspruchs 1 sowie ein Verfahren zur Vorbehandlung von Oberflächen mit den Merkmalen des Anspruchs 9. Die Merkmale der abhängigen Ansprüche betreffen vorteilhafte Ausführungsformen.

Die erfindungsgemäße Vorbehandlungsanlage weist eine Behandlungskammer auf, in die die Werkstücke zur Behandlung eingebracht werden können. Vorteilhaft ist es, wenn die Behandlungskammer mit einer Tür verschließbar ist und über eine geeignete Abluftanlage verfügt. In der Behandlungskammer findet sich eine Verteilereinrichtung, die dazu dient, die Medien auf den Werkstückoberflächen zu verteilen. Dabei kann es sich beispielsweise um Anordnungen von Düsen handeln. Weiterhin weist die erfindungsgemäße Vorbehandlungsanlage eine Mehrzahl an Medienbehältern auf, die hauptsächlich der Filterung, Lagerung bzw. Zwischenlagerung der in der Vorbehandlungsanlage verwendeten Medien dienen, sowie eine Sammeleinrichtung, welche dem Auffangen der überschüssigen Medien während der einzelnen Behandlungsschritte dient. Bei der Sammeleinrichtung kann es sich beispielsweise um eine Vertiefung des Bodens der Behandlungskammer hin zu einem tiefsten Punkt handeln, wobei erfindungsgemäß vorgesehen ist, dass die Sammeleinrichtung wahlweise mit den einzelnen Medienbehältern verbunden werden kann.

Dadurch ist es möglich, die Werkstücke in die Behandlungskammer einzubringen, die Oberflächen der Werkstücke in einem ersten Behandlungsvorgang mit einem ersten Medium zu behandeln, dabei das überschüssige Medium aufzufangen, über eine Verbindungsvorrichtung in einen der Medienbehälter abzuführen und danach einen weiteren Behandlungs- oder Spülvorgang in derselben Behandlungskammer mit einem weiteren Medium durchzuführen, wobei das überschüssige Medium über die Verbindungsvorrichtung diesmal einem anderen Medienbehälter zugeführt wird. Durch das Vorsehen einer ausreichenden Anzahl an Medienbehältern lässt sich dieser Vorgang so oft wie nötig wiederholen, so dass die komplette Vorbehandlung in einer einzigen Kammer durchgeführt werden kann. Diese kann um ein Vielfaches kleiner ausgeführt werden als es bei einer Durchlaufanlage der Fall ist, was mit den entsprechenden Einsparungen für den Bau der Anlage verbunden ist.

Vorzugsweise ist eine Verbindungsvorrichtung vorgesehen, die die Sammeleinrichtung der Behandlungskammer mit den einzelnen Medienbehältern wahlweise verbinden kann.

Vorteilhaft ist es, die Verbindungsvorrichtung so auszulegen, dass sie eine gegenseitige Verunreinigung der Medien aufgrund ihrer Bauart nach Möglichkeit weitgehend ausschließt. Hierfür ist es zum Einen vorteilhaft, die Medienbehälter unterhalb der Behandlungskammer anzuordnen, zum Anderen ist es vorteilhaft, die Verbindungsvorrichtung zwischen Medienbehälter und Behandlungskammer anzuordnen.

Diese Anordnungen vereinfachen es, die Verbindungsvorrichtung so zu gestalten, dass sie einen Fließweg für flüssige Medien mit einem stetigen Gefälle aufweist. Durch dieses stetige Gefälle kann das jeweilige Medium restlos in den Medienbehälter ablaufen, da sich durch das stetige Gefälle des Fließweges keine stehenden Flüssigkeitsansammlungen bilden können, die in der Verbindungsvorrichtung zurückbleiben und sich beim nächsten Behandlungsschritt mit einem anderen Medium mischen können. Wenn die Medien durch das Gefälle des Fließwegs in der Verbindungsvorrichtung transportiert werden, bedeutet dies zudem, dass keinerlei Pumpen oder ähnliches für die Abfuhr der Medien aus der Behandlungskammer benötigt werden.

Die wahlweise Verbindbarkeit der Verbindungsvorrichtung mit den einzelnen Medienbehältern kann vorzugsweise dadurch realisiert sein, dass die Verbindungsvorrichtung ein verschwenkbares Verbindungselement, bei dem es sich beispielsweise um ein einfaches Rohr handeln kann, aufweist. Ein derartiges verschwenkbares Verbindungselement kann beispielsweise um eine vertikale Achse drehbar gelagert sein. Hierdurch wird es ermöglicht, den Medienausgang der Verbindungsvorrichtung oberhalb eines Medieneingangs eines Medienbehälters zu platzieren. Das Medium kann dadurch restlos aus der Verbindungsvorrichtung in den Medienbehälter laufen. Ist das Medium, soweit dies technisch möglich ist, aus der Behandlungskammer abgelaufen, kann durch ein Verschwenken des Verbindungselements der Medienausgang der Verbindungsvorrichtung über einem anderen Medieneingang eines anderen Medienbehälters platziert werden, in den nun das im nächsten Behandlungsschritt verwendete Medium ablaufen kann. Unter technisch möglichem vollständigem Ablaufen des Mediums ist dabei zu verstehen, dass es bei derartigen Anlagen nie ausgeschlossen werden kann, dass beispielsweise Tropfen eines Mediums auf Oberflächen haften bleiben und nicht restlos ablaufen. Eine vollständige Trennung wird somit nicht immer zu erreichen sein. In der Praxis genügt es jedoch, den Grad der Verunreinigung des nächsten Mediums in einem technisch vertretbaren Rahmen zu halten.

Die Medien in den Medienbehältern können dann der Behandlungskammer wieder zugeführt werden und in der Behandlungskammer in die Verteilereinrichtung wieder eingespeist werden, beispielsweise wenn die nächste Charge Werkstücke behandelt werden soll. Dabei kann die Verteilereinrichtung vorteilhafterweise beweglich ausgeführt werden. Dies ermöglicht es, einen möglichst homogenen Auftrag der Medien auf den Oberflächen der Werkstücke zu erzielen, ohne die Verteilereinrichtung für das gesamte Volumen der Behandlungskammer auslegen zu müssen. Vielmehr kann die Verteilereinrichtung beispielsweise durch ein Schienensystem entlang der Haupterstreckungsrichtung der Behandlungskammer bewegt werden, wodurch ein Auftrag der Medien auf die Oberflächen ähnlich wie in einer Durchlaufanlage erzielt wird, ohne die Werkstücke selbst bewegen zu müssen, da die Verteilereinrichtung beispielsweise an bügelartig ausgeführten Rohren aufgenommene Düsen durch die Behandlungskammer und somit an den Werkstücken vorbei bewegt werden.

Vorteilhaft ist es dabei insbesondere, wenn die einzelnen Medienbehälter Filter aufweisen. Hierdurch kann es ermöglicht werden, die Medien zwischen der Abführung aus der Behandlungskammer und der erneuten Zuführung in die Behandlungskammer aufzubereiten bzw. zu filtern. Dies ist insbesondere dann von Vorteil, wenn die Werkstücke noch Verschmutzungen aufweisen, die mit den Medien abtransportiert werden und nach Möglichkeit aus den Medienkreisläufen entfernt werden sollen, um beispielsweise die Pumpen oder die Düsen der Verteilereinrichtung nicht zu verstopfen bzw. zu beschädigen.

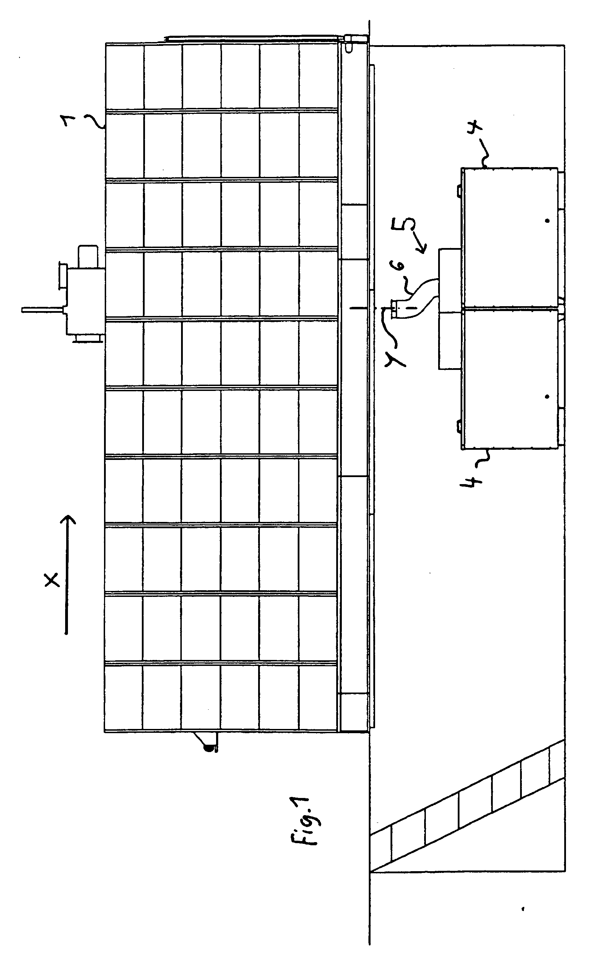

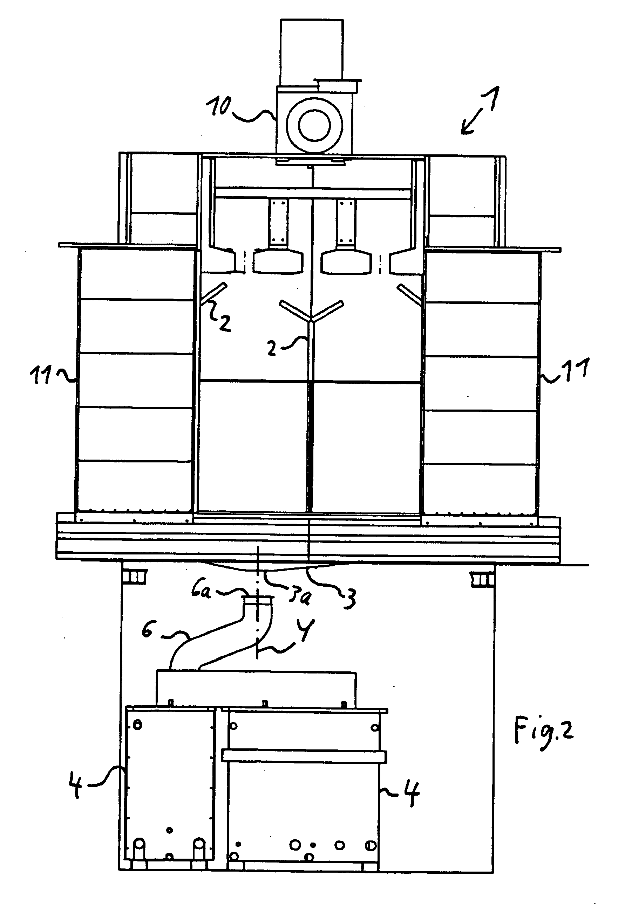

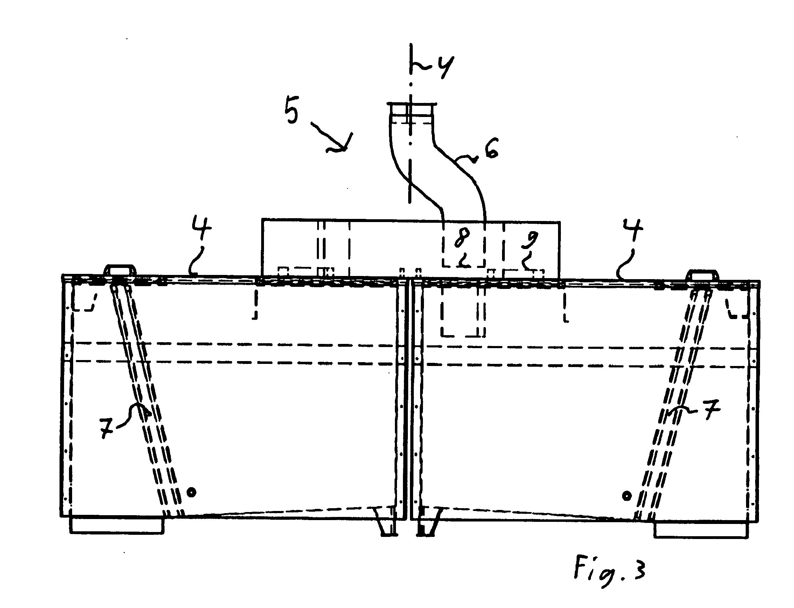

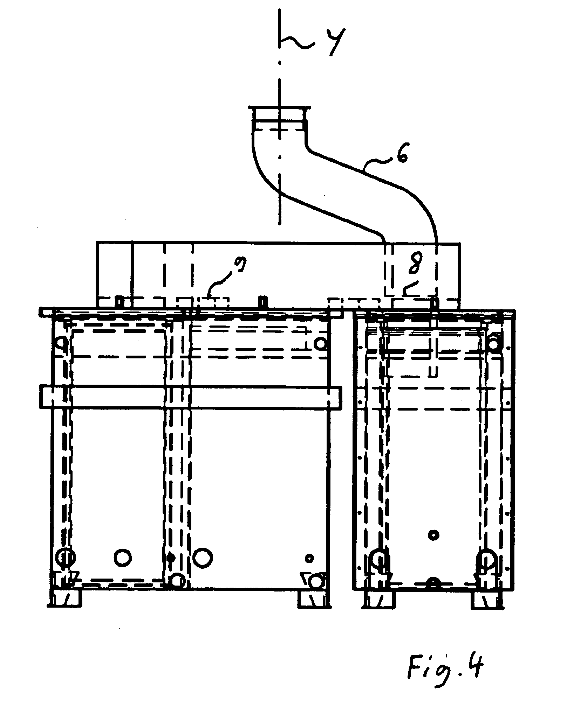

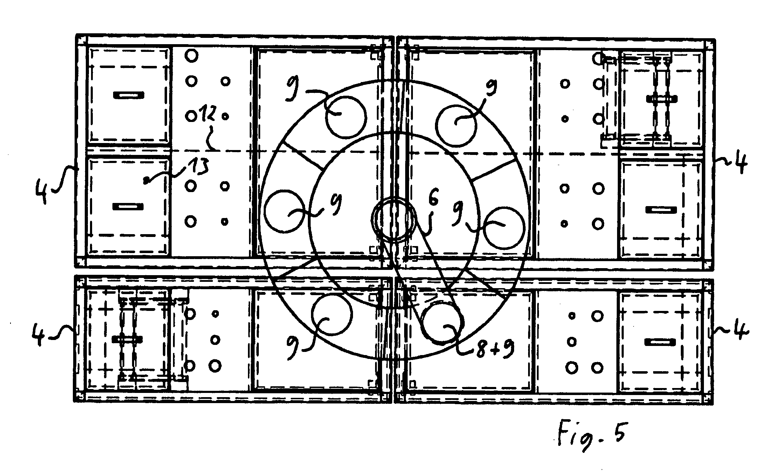

Die Erfindung wird im Folgenden anhand der Figuren 1 bis 5 schematisch näher'erläutert.
Fig. 1 zeigt schematisch eine beispielhafte erfindungsgemäße Vorbehandlungsanlage in einer Seitenansicht.
Fig. 2 zeigt schematisch eine Seitenansicht der Vorbehandlungsanlage aus Fig. 1 aus einer anderen Richtung.
Fig. 3 zeigt eine schematische Detailansicht der Verbindungsvorrichtung und der Medienbehälter aus Fig. 1.

Fig. 4 zeigt eine ähnliche Detailansicht aus der der Fig. 2 entsprechende Perspektiven.

Fig. 5 zeigt eine entsprechende Darstellung der Verbindungsvorrichtung und der Medienbehälter als Aufsicht von oben.

Die beispielhafte erfindungsgemäße Vorbehandlungsanlage weist eine Behandlungskammer 1 auf, die über ein Abluftsystem verfügt und durch die Türen 11 verschlossen werden kann. Im Inneren der Behandlungskammer 1 befindet sich die Verteilereinrichtung 2, die im gezeigten Beispiel aus bügelförmigen Rohrleitungen besteht, an denen Düsen zum Verteilen der Medien aufgenommen sind, wobei das Paket aus den Rohrleitungen mit den Düsen durch ein Schienensystem entlang der Haupterstreckungsrichtung X der Behandlungskammer durch die Behandlungskammer bewegt werden kann. Der Boden der Behandlungskammer 1 ist als Sammeleinrichtung 3 ausgeführt, wobei an der tiefsten Stelle ein Durchlass 3a vorgesehen ist, der mit dem Eingang 6a des Verbindungselements 6 der Verbindungsvorrichtung 5 derart verbunden werden kann, dass von der Sammeleinrichtung 3 aufgefangene Medien in das Verbindungselement 6 laufen, das Verbindungselement 6 jedoch relativ zur Sammeleinrichtung 3 um die Achse Y gedreht werden kann. Unterhalb der Verbindungsvorrichtung 5 befindet sich eine Mehrzahl Medienbehälter 4, welche im gezeigten Beispiels teilweise als Einzelbehälter zur Aufnahme eines Mediums ausgeführt sind, teilweise auch als Doppelbehälter ausgeführt sind, die zwei unterschiedliche Medien aufnehmen können, welche dann durch eine Trennwand 12 getrennt sind. Zur Aufbereitung der Medien weisen die Behälter Filter 7 auf, die den jeweiligen Behälterraum in zwei Abschnitte trennen und nach dem Entfernen der Abdeckungen 13 zur Reinigung oder zum Austausch aus den Medienbehältern 4 entnommen werden können.

Das Verbindungselement 6 ist beispielshaft als Rohr ausgeführt, welches zweimal in einem Winkel von beispielsweise 45° in entgegengesetzte Richtungen abgebogen ist. Der Winkel kann auch größer oder kleiner sein, wichtig ist, dass der Medienausgang 8 aus dem Bereich der Schwenkachse Y verlängert wird, um verschiedene Medieneingänge 9 zu erreichen, und dass vorteilhafterweise ein stetiges Gefälle des Fließweges gewährleistet wird. Durch diese Form ist es möglich, durch das Rotieren des Rohres 6 in die Achse Y den Medienausgang 8 oberhalb eines Medieneingangs 9 eines jeweiligen Behälters zu positionieren. Die Medien können dadurch das Verbindungselement 6 alleine aufgrund der Schwerkraft als treibende Kraft durchfließen, wobei es nicht zur Ansammlung stehender Flüssigkeitsmengen aufgrund des stetigen Gefälles des Fließweges kommen kann. Dadurch wird eine mögliche Verunreinigung in folgenden Schritten durch das Verbindungselement 6 geleiteter Medien auf ein Minimum reduziert.

## Patentansprüche

1. Vorbehandlungsanlage zur Vorbehandlung, insbesondere durch Entfetten, Beizen, Chromatieren, Phosphatieren und/oder Passivieren, von Oberflächen von Werkstükken für eine Oberflächenbehandlung, insbesondere für eine Lackierung, eine Behandlungskammer (1) mit einer Verteilereinrichtung (2) und einer Sammeleinrichtung (3) und eine Mehrzahl Medienbehälter (4) aufweisend, wobei die Sammeleinrichtung (3) wahlweise mit den einzelnen Medienbehältern (4) verbunden werden kann, wobei zum wahlweisen Verbinden der einzelnen Medienbehälter (4) mit der Sammeleinrichtung (3) eine Verbindungsvorrichtung (5) vorgesehen ist,
**dadurch gekennzeichnet,**
**dass** der Fließweg für flüssige Medien der Verbindungsvorrichtung (5) ein stetiges Gefälle aufweist.

2. Vorbehandlungsanlage nach einem der vorigen Ansprüche,
**dadurch gekennzeichnet,**
**dass** die Medienbehälter (4) unterhalb der Behandlungskammer (1) angeordnet sind.

3. Vorbehandlungsanlage nach einem der vorigen Ansprüche,
**dadurch gekennzeichnet,**
**dass** die Verbindungsvorrichtung (5) zwischen Medienbehälter (4) und Behandlungskammer (1) angeordnet ist.

4. Vorbehandlungsanlage nach einem der vorigen Ansprüche,
**dadurch gekennzeichnet,**
**dass** die Verbindungsvorrichtung (5) ein verschwenkbares Verbindungselement (6), insbesondere ein Rohr, aufweist.

5. Vorbehandlungsanlage nach einem der vorigen Ansprüche,
**dadurch gekennzeichnet,**
**dass** das Verbindungselement (6) um eine vertikale Achse (Y) drehbar gelagert ist.

6. Vorbehandlungsanlage nach einem der vorigen Ansprüche,
**dadurch gekennzeichnet,**
**dass** die Verteilereinrichtung (5) beweglich, vorzugsweise entlang der Haupterstreckungsrichtung (X) der Behandlungskammer (1) verschieblich, in der Behandlungskammer (1) angeordnet ist.

7. Vorbehandlungsanlage nach einem der vorigen Ansprüche,
**dadurch gekennzeichnet,**
**dass** die Verteilereinrichtung (5) wahlweise mit jeweils einem der Medienbehälter (4) verbunden werden kann.

8. Vorbehandlungsanlage nach einem der vorigen Ansprüche,
**dadurch gekennzeichnet,**
**dass** die Medienbehälter (4) Filter aufweisen.

9. Verfahren zur Vorbehandlung von Oberflächen von Werkstücken, insbesondere durch Entfetten, Beizen, Chromatieren, Phosphatieren und/oder Passivieren, für eine Oberflächenbehandlung, insbesondere für eine Lackierung, insbesondere in einer Vorbehandlungsanlage nach einem der vorigen Ansprüche, wobei die Werkstücke in eine Behandlungskammer eingebracht werden, die Oberflächen der Werkstücke in einem ersten Behandlungsvorgang mit einem Medium behandelt werden und das überschüssige Medium über eine Verbindungsvorrichtung (5) aus der Behandlungskammer (1) in einen Medienbehälter (4) abgeführt wird, wobei danach ein weiterer Behandlungs- und/oder Spülvorgang in der Behandlungskammer (1) mit einem weiteren Medium durchgeführt wird, wobei das überschüssige Medium (4) über die Verbindungsvorrichtung (5) einem weiteren Medienbehälter (4) zugeführt wird,
**dadurch gekennzeichnet,**
**dass** die Medien bei der Abfuhr aus der Behandlungskammer (1) durch das stetige Gefälle des Fließwegs in der Verbindungsvorrichtung (5) transportiert werden.

10. Verfahren nach Anspruch 10,
**dadurch gekennzeichnet,**
**dass** zwischen den Behandlungsschritten ein Medienausgang (8) der Verbindungsvorrichtung (5) von einer Position oberhalb eines Medieneingangs (9) des ersten Medienbehälters (4) in eine Position oberhalb eines Medieneingangs (9) eines zweiten Medienbehälters (4) bewegt wird.

11. Verfahren nach Anspruch 9 oder 10,
**dadurch gekennzeichnet,**
**dass** die Medien in den Medienbehältern (4) der Behandlungskammer (1) wieder zugeführt werden.

12. Verfahren nach einem der Ansprüche 9 bis 11,
**dadurch gekennzeichnet,**
**dass** die Medien zwischen der Abführung aus der Behandlungskammer (1) und der erneuten Zuführung in die Behandlungskammer (1) aufbereitet, insbesondere gefiltert, werden.

## Claims

1. Pre-treatment system for pre-treatment, in particular degreasing, chroming, phosphating and / or passivation, of surfaces of workpieces for surface treatment, in particular for painting, comprising a treatment chamber (1) with a distribution means (2) and a collecting means (3) and a plurality of media containers (4), wherein the collecting means (3) can optionally be connected to the individual media containers (4), wherein a connecting apparatus (5) is provided for optional connection of the individual media containers (4) to the collecting means (3),
**characterised in that**
the flow path for liquid media of the connecting apparatus (5) has a constant gradient.

2. Pre-treatment system according to one of the preceding claims,
**characterised in that**
the media containers (4) are arranged below the treatment chamber (1).

3. Pre-treatment system according to one of the preceding claims,
**characterised in that**
the connecting apparatus (5) is arranged between the media container (4) and treatment chamber (1).

4. Pre-treatment system according to one of the preceding claims,
**characterised in that**
the connecting apparatus (5) comprises a pivotable connecting element (6), in particular a pipe.

5. Pre-treatment system according to one of the preceding claims,
**characterised in that**
the connecting element (6) is mounted to be rotatable about a vertical axis (Y).

6. Pre-treatment system according to one of the preceding claims,
**characterised in that**
the distribution means (5) is arranged in the treatment chamber (1) to be movable, preferably displaceable along the main extension direction (X) of the treatment chamber (1).

7. Pre-treatment system according to one of the preceding claims,
**characterised in that**
the distribution means (5) can optionally be connected to one of the media containers (4) respectively.

8. Pre-treatment system according to one of the preceding claims,
**characterised in that**
the media containers (4) comprise filters.

9. Method for pre-treating surfaces of workpieces, in particular by degreasing, pickling, chroming, phosphating and / or passivation, for a surface treatment, in particular for painting, in particular in a pre-treatment system according to one of the preceding claims,
wherein the workpieces are introduced into a treatment chamber, the surfaces of the workpieces are treated in a first treatment process with a medium and the excess medium is removed via a connecting apparatus (5) from the treatment chamber (1) into a media container (4), whereby subsequently a further treatment and / or rinsing process is carried out in the treatment chamber (1) with a further medium, wherein the excess medium (4) is fed via the connecting apparatus (5) to a further media container (4),
**characterised in that**
the media are transported, upon removal from the treatment chamber (1), through the constant gradient of the flow path in the connection apparatus (5).

10. Method according to claim 10,
**characterised in that**
a media outlet (8) of the connecting apparatus (5) is moved, between the handling steps, from a position above a media inlet (9) of the first media container (4) into a position above a media inlet (9) of a second media container (4).

11. Method according to claim 9 or 10,
**characterised in that**
the media are fed back into the media containers (4) to the treatment chamber (1).

12. Method according to one of the claims 9 to 11,
**characterised in that**
the media are prepared, in particular filtered, between the removal from the treatment chamber (1) and the renewed supply into the treatment chamber (1).

## Revendications

1. Installation de prétraitement pour le traitement préliminaire, en particulier par graissage, décapage, chromatage, phosphatage et / ou passivation de surfaces de pièces à usiner, pour un traitement superficiel, en particulier pour un laquage, laquelle installation présente une chambre de traitement (1), avec un dispositif répartiteur (2) et un dispositif collecteur (3), ainsi qu'une pluralité de conteneurs d'agents de traitement (4), sachant que le dispositif collecteur (3) peut être relié à volonté aux différents conteneurs d'agents de traitement (4), un dispositif de liaison (5) étant prévu pour le raccordement optionnel aux différents conteneurs d'agents de traitement (4),
**caractérisée en ce que**
la voie d'écoulement d'agents de traitement liquides du dispositif de liaison (5) présente une déclivité constante.

2. Installation de prétraitement selon la revendication 1, **caractérisée en ce que** les conteneurs d'agents de traitement (4) sont disposés au-dessous de la chambre de traitement (1).

3. Installation de prétraitement selon l'une des revendications précédentes, **caractérisée en ce que** le dispositif de liaison (5) est disposé entre les conteneurs d'agents de traitement (4) et la chambre de traitement (1).

4. Installation de prétraitement selon l'une des revendications précédentes, **caractérisée en ce que** le dispositif de liaison (5) présente un élément de liaison (6) pivotant, en particulier un tube.

5. Installation de prétraitement selon l'une des revendications précédentes, **caractérisée en ce que** l'élément de liaison (6) est monté à rotation autour d'un axe vertical (Y).

6. Installation de prétraitement selon l'une des revendications précédentes, **caractérisée en ce que** le dispositif de liaison (5) est monté de manière mobile dans la chambre de traitement (1) et peut être déplacé de préférence le long de la dimension principale (X) de la chambre de traitement (1).

7. Installation de prétraitement selon l'une des revendications précédentes, **caractérisée en ce que** le dispositif de liaison (5) peut être relié au choix à l'un des conteneurs d'agents de traitement (4).

8. Installation de prétraitement selon l'une des revendications précédentes, **caractérisée en ce que** les conteneurs d'agents de traitement (4) présentent des filtres.

9. Procédé de prétraitement de surfaces de pièces à usiner, en particulier par dégraissage, décapage, chromage, phosphatage et / ou par passivation pour un traitement superficiel, en particulier pour un laquage, en particulier dans une installation de prétraitement selon l'une des revendications précédentes, sachant que les pièces sont amenées dans une chambre de traitement, que les surface desdites pièces sont traitées avec un agent de traitement au cours d'une première opération de traitement et que l'excédent d'agent de traitement est évacué de la chambre de traitement (1), par l'intermédiaire d'un dispositif de liaison (5), dans un conteneur d'agent de traitement (4), une autre opération de traitement et / ou de rinçage étant ensuite exécutée dans la chambre de traitement (1) avec un autre agent de traitement, sachant que l'excédent d'agent de traitement (4) est conduit dans un autre conteneur d'agent de traitement (4) par l'intermédiaire du dispositif de liaison (5),
**caractérisée en ce que**
les agents de traitement, lors de l'évacuation hors de la chambre de traitement (1) sont transportés dans le dispositif de liaison (5) en raison de la déclivité constante de la voie d'écoulement.

10. Procédé selon la revendication 9, **caractérisé en ce que**, entre les étapes de traitement, une sortie d'agent de traitement )8) du dispositif de liaison (5) est amenée, à partir d'une position, qui est située au-dessus d'une entrée d'agent de traitement (9) du premier conteneur d'agent de traitement (4), dans une position. Qui est située au-dessus d'une entrée d'agent de traitement (9) d'un deuxième conteneur d'agent de traitement (4).

11. Procédé selon revendication 9 ou 10, **caractérisé en ce que** les agents de traitement dans les conteneurs d'agents de traitement (4) sont reconduits dans la chambre de traitement (1).

12. Procédé selon l'une des revendications 9 à 11, **caractérisé en ce que** les agents de traitement sont traités, en particulier filtrés, entre leur évacuation hors de la chambre de traitement (1) et leur retour dans la chambre de traitement (1).
